Europäisches Patentamt

European Patent Office

Office européen des brevets

(11) Publication number: 0 404 545
A2

(12) **EUROPEAN PATENT APPLICATION**

(21) Application number: 90306737.9

(51) Int. Cl.⁵: G02F 1/136

(22) Date of filing: 20.06.90

(30) Priority: 20.06.89 JP 157321/89

(43) Date of publication of application:
27.12.90 Bulletin 90/52

(84) Designated Contracting States:
DE FR GB

(71) Applicant: JAPAN SYNTHETIC RUBBER CO.,
LTD.
11-24, Tsukiji-2-chome Chuo-ku
Tokyo 104(JP)

(72) Inventor: Shimoda, Sugiro, c/o Japan
Synthetic Rubber Co.,
Ltd., Shataku No. 1-103, 2-29, Aobadai
Midori-ku, Yokohama-shi, Kanagawa-ken(JP)
Inventor: Haruta, Yuiti, c/o Japan Synthetic
Rubber Co.,
Ltd., Shataku No. 1-104, 2-29, Aobadai
Midori-ku, Yokohama-shi, Kanagawa-ken(JP)
Inventor: Matsui, Shingo, c/o Japan Synthetic
Rubber Co.,
Ltd., Shataku No. 2-102, 2-29, Aobadai
Midori-ku, Yokohama-shi, Kanagawa-ken(JP)

(74) Representative: Clifford, Frederick Alan et al
MARKS & CLERK 57/60 Lincoln's Inn Fields
London WC2A 3LS(GB)

(54) Active matrix substrate for liquid crystal display device.

(57) The active matrix substrate for liquid crystal display device has a feature in that an even number of diode elemental devices are formed per one picture element, and also the diode used comprises a first electrode layer formed on an electrically insulating substrate, a metal oxide semiconductor or a metal chalcogenide semiconductor layer formed on said first electrode layer, and a second electrode layer formed on said semiconductor layer, with one of said first electrode layer and said second electrode layer together with said semiconductor layer forming a Schottky junction, and the other of said first electrode layer and said second electrode layer together with said semiconductor layer forming an ohmic junction. In the active matrix substrate, picture elements can be driven at low voltage and high precision, and it has also the advantage that no vacuum film forming equipment is required to be used for formation of the semiconductor layer of the diode elemental device used

## Active matrix substrate for liquid crystal display device

## BACKGROUND OF THE INVENTION

### 1. Field of the Invention

This invention relates to an active matrix substrate for liquid crystal display device.

### 2. Description of the Prior Art

As the matrix substrate to be used for liquid crystal display devices, there have been known those of the active matrix system having a switching device such as a thin film transistor elemental device or diode elemental device provided at each picture element. The active matrix system realizes a large area display panel with an increased number of picture elements without lowering the contrast ratio of the display panel. Among the active matrix systems, the active matrix systems using diode elemental devices are manufactured with a higher yield than those using thin film transistor elemental devices, because diode matrixes can be manufactured by a simpler process.

In the prior art, as the diode elemental device of the active matrix substrate for liquid crystal display device to be used in the active matrix system (hereinafter referred to merely as "active matrix substrate"), those having hydrogenated amorphous silicon, hydrogenated amorphous silicon carbide, polysilicon, etc. used for the semiconductor layer have been known. As the circuit system of the active matrix substrate, the MIM system, the back to back system, the ring diode system, etc. have been known.

However, in the active matrix substrate of the prior art having diode elemental devices using semiconductor layers of hydrogenated amorphous silicon, hydrogenated amorphous silicon carbide or polysilicon, etc., because the sputtering method, the CVD method, etc. are required to be used for preparation of these semiconductor layers, it is necessary to use a vacuum film formation equipment. Therefore, for production of a large amount of active matrix substrates of a large area, there is the problem that a large scale equipment is required, which results in the disadvantage of increased production cost.

In the circuit system of the active matrix substrate with the above-mentioned MIM system, back to back system and ring diode system, for prevention of cross-talk between the scanning lines of the dot matrix, the diode switch with the threshold voltage higher than the voltage to drive the liquid crystals (about 3 to 5 volts) are required. Therefore, for driving each picture element, a high voltage corresponding to the sum of the driving voltage of the liquid crystals and the above-mentioned threshold voltage of the diode switches is required, whereby there is the drawback that the advantage of liquid crystal display device of low power consumption is lost.

Further, in the MIM system, since Poole-Frenkel effect or varistor characteristics, etc. are utilized for diode elemental devices, a great deviation is liable to occur in the threshold value voltage of diode elemental devices. Therefore, in driving the liquid crystal display device, it is difficult to apply a predetermined voltage onto the picture elements at high precision, whereby there is also the drawback that deviation of the display characteristics of the picture elements is liable to occur.

Since the back to back system also utilizes the characteristics in the backward direction of the diode elemental devices, it has the drawback that deviation of threshold value is liable to occur in the switching characteristics.

The ring diode system, which utilizes the forward direction characteristics of diode elemental devices, is small in deviation of threshold value voltage of diode elemental devices, but has the drawback that a large number of diode elemental devices are necessary per one picture element because the threshold value voltage of one diode elemental device is as small as 0.6 volts.

## SUMMARY OF THE INVENTION

Accordingly, an object of the present invention is to provide an active matrix substrate which has picture element display characteristics of high precision at low power consumption, and yet can be prepared by a simple process with simple equipment without use of a special device such as vacuum film formation equipment, etc.

According to the present invention, there is provided an active matrix substrate for liquid crystal display device comprising a plurality of scanning electrodes arranged in substantially parallel to each other and a plurality of transparent electrodes for forming picture elements provided on an electrically insulating substrate, said plurality of transparent electrodes being arranged in a matrix to form rows parallel to each other, each row of said transparent electrodes being positioned respectively between the two scanning electrodes (the first and the second scanning electrodes) or adjacent to the scanning electrode pair, wherein

an even number of diode elemental devices are formed per said picture element, which even number of diode elemental devices constitute a diode row. connected electrically in series and in the same direction, and yet said transparent electrodes for forming picture elements are electrically connected at the intermediate point where the even number of diode elemental devices of the diode row are divided into the same numbers,

one end of said diode row is electrically connected to the first scanning electrode, and the other end to the second scanning electrode, and

said diode elemental device comprises a first electrode layer formed on an electrically insulating substrate, a metal oxide semiconductor or a metal chalcogenide semiconductor layer formed on said first electrode layer and a second electrode layer formed on said semiconductor layer, one of said first electrode and said second electrode layer together with said semiconductor layer forming a Schottky junction and the other of said first electrode layer and said second electrode layer forming an ohmic junction.

In the active matrix substrate of the present invention, by switching adequately the voltage to be applied on the two scanning electrodes (scanning lines), the switch circuit to the picture elements constituted of diode elemental devices can choose the states of closed circuit (low resistance) and high resistance. Under the closed circuit state, since the forward direction characteristics with small threshold value voltage of the diode elemental device is utilized, deviation in switching characteristics becomes smaller, whereby the picture elements can be driven at low voltage and high precision as compared with the MIM system.

Also, in the present invention, the minimum number of the diode elemental devices necessary for one picture element is two, but by providing 4 or 6 diode elemental devices, deviations of the individual diode elemental devices can be compensated, whereby the advantage of uniforming the switching characteristics of the individual picture elements can be also accomplished. Further, most of the defects generated in the diode elemental devices are short circuits, and by providing 4 or 6 diode elemen tal devices for each picture element, the probability of the picture elements becoming completely inoperative is reduced to a great extent, whereby the production yield of the substrate is improved.

According to the present invention, as described above and later, the active matrix substrate can be produced by a simple process without expensive vacuum film forming equipments, and the invention makes it possible to provide inexpensive active matrix liquid crystal display devices with high quality picture.

BRIEF DESCRIPTION OF THE DRAWINGS

Fig. 1 (A) and (B) are respectively drawings showing examples of the positional relationship of the scanning electrodes, the transparent electrodes which become picture elements and the diode elemental devices in the active matrix substrate of the present invention.

Fig. 2 (A) is a plan view of the active matrix substrate for liquid crystal device of the present invention, Fig. 2 (B) shows its sectional view.

Fig. 3 is an I-V characteristic curve showing the rectifying characteristics of the diode elemental device possessed by the active matrix substrate for liquid crystal display device of the present invention.

Fig. 4 is a diagram showing an example of the liquid crystal display device constituted by use of the active matrix substrate shown in Fig. 2.

Fig. 5 (A), (B) and (C) are diagrams showing the equivalent circuits of the liquid crystal display devices constituted by use of the active matrix substrates having 2, 4 and 6 diode elemental devices provided per one picture element, respectively.

Fig. 6 (A) - (C) are diagrams showing the voltage ·wave forms applied on the transparent electrodes of the opposite glass substrates, scanning electrodes 11-1 and 11-2 in Example 4, respectively.

DETAILED DESCRIPTION OF THE INVENTION

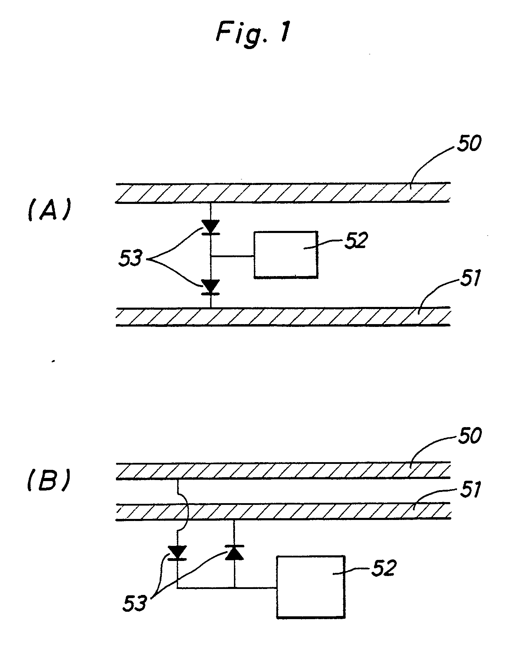

The positional relationship of the scanning electrodes, the transparent electrodes which become picture elements and the diode elemental devices in the active matrix substrate of the present invention are shown briefly in Fig. 1. That is, as shown in Fig. 1 (A), at the position between the first scanning electrode 50 and the second scanning electrode 51, a transparent electrode 52 which becomes the picture element is arranged, and said transparent electrode 52 constitutes a row in such positional relationship. To each of the transparent electrodes 52 are connected an even number (2 in the Figure) of diode elemental devices 53, and these diode elemental devices 53 are connected to the first and the second electrodes 50, 51. Also, as shown in Fig. 1 (B), adjacent to the scanning electrode pair comprising the first and the second scanning electrodes 50, 51 may be arranged a transparent electrode 52, and in such positional relationship said transparent electrode 52 may constitute a row. Also, in this case, an even number of diode elemental devices 53 are connected to each transparent electrode 52, and also connected respectively to the first and the second scanning electrodes 50, 51. Although only one transparent electrode 52 is shown in Fig. 1 (A) and (B), it will be readily understood that the transparent electrode 52 is provided in a plural number at the positional relationship shown in the respective Figures to constitute a row.

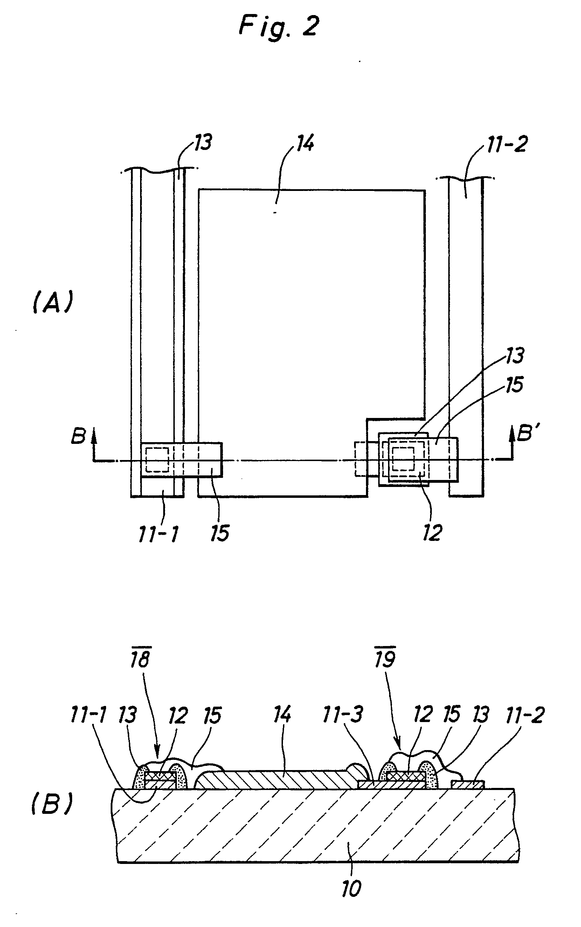

A plan view per one picture element in a representative example of the active matrix substrate of the present invention is shown in Fig. 2 (A), and its B-B' sectional view in Fig. 2 (B).

In the active matrix substrate, scanning electrodes 11-1 and 11-2 are provided on the electrically in sulating substrate 10, and between these scanning electrodes 11-1 and 11-2 is arranged a transparent electrode 14 which becomes the picture element.

On the scanning electrode 11-1 is provided a semiconductor layer 12, and further an electrode layer 15 on said semiconductor layer 12. Thus, the first diode elemental device 18 is formed of the scanning electrode 11-1, the semiconductor layer 12 and the electrode layer 15. In the diode elemental device 18, the semiconductor layer 12 forms a Schottky junction with either one of the scanning electrode 11-1 and the electrode layer 15, and also an ohmic junction with the other of the scanning electrode 11-1 and the electrode layer 15. On both sides of the scanning electrode 11-1 and the semiconductor layer 12 are provided the insulating layers 13, and also the electrode layer 15 is connected to one end of the transparent electrode 14.

Further, the electrode layer 11-3 is provided as connected to the other side end of the transparent electrode 14, and the electrode layer 11-3 is provided with the semiconductor layer 12, the electrode layer 15 and the insulating layer 13 similarly as described above. Thus, the second diode elemental device 19 is formed of the electrode layer 11-3, the semiconductor layer 12 and the electrode layer 15. The electrode layer 15 is connected to the scanning electrode 11-2. In the diode elemental device 19, the semiconductor layer 12 forms a Schottky junction with either one of the electrode layer 11-3 and the electrode layer 15, and also an ohmic junction with the other of the electrode layer 11-3 and the electrode layer 15.

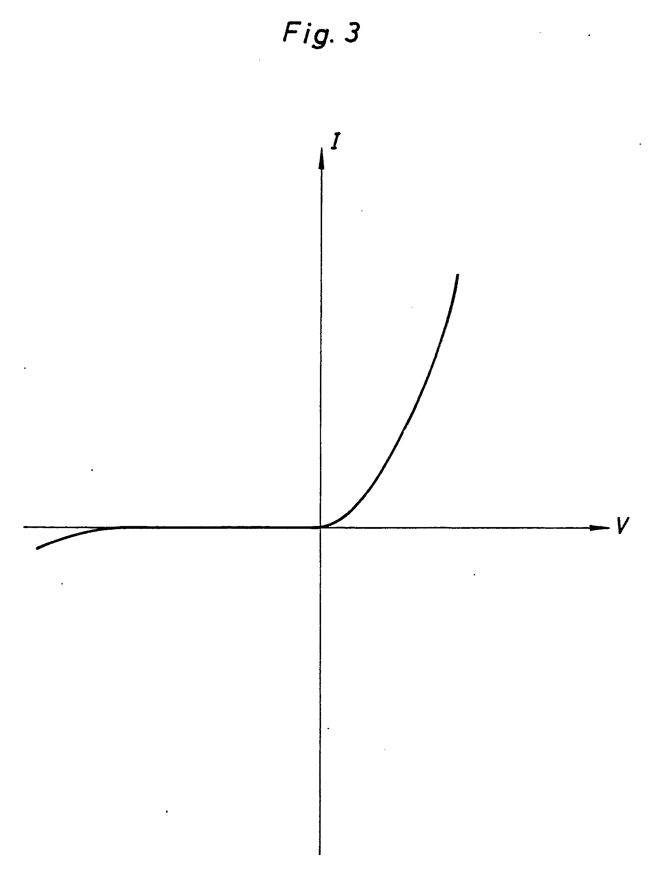

In the above active matrix substrate, it will be understood that the first and the second diode elemental devices are connected electrically in series through the transparent electrode 15 which becomes the picture element. The I-V characteristics of the diode elemental devices of the active matrix substrate exhibit the rectifying characteristics as shown in Fig.3.

The example in Fig. 2 as described above is an example of having two diode elemental devices provided per one picture element, but in the present invention, an even number of 4, 6 or more may be provided per one picture element. By increasing the number of the diode elemental devices per one picture element, deviations of individual diode elemental devices can be compensated, whereby the advantage of uniforming the switching characteristics of the individual picture elements can be accomplished.

## Electrically insulating substrate

As the material for the electrically insulating substrate to be used in the active matrix substrate of the present invention, for example, insulating materials such as glass, epoxy resin, polyester, polyurethane, polyimide, etc. can be included.

## Diode elemental device

The diode elemental device to be used in the active matrix substrate of the present invention is constituted of a first electrode layer, a semiconductor layer formed on said first electrode layer and a second electrode layer formed on said semiconductor layer. Said semiconductor layer comprises a metal oxide semiconductor or a metal chalcogenide semiconductor. For example, in the first diode elemental device 18 in Fig. 2, the first electrode layer corresponds to the scanning electrode 11-1, and the second electrode layer to the electrode layer 15. In the other hand, in the second diode elemental device 19, the first electrode layer corresponds to the electrode layer 11-3; and the second electrode layer to the electrode layer 15.

As the metal oxide semiconductor to be used in the semiconductor layer constituting the above diode elemental device, for example, zinc oxide, cuprous oxide, etc. can be included. As the metal chalcogenide semiconductor, for example, cadmium sulfide (CdS), cadmium selenide (CdSe), cadmium telluride (CdTe), etc. can be included.

The thickness of these semiconductor layers may be generally 0.01 to 10 $\mu$m, preferably 0.1 to 10 $\mu$m. If the semiconductor layer is too thin, defects are liable to be formed, while if it is too thick, the resistance of the diode elemental device becomes too great.

The first and the second electrode layers provided on the above diode elemental device are films comprising an conductive material, including metal films of, e.g., chromium, titanium, aluminium, nickel, copper, silver, gold, tungsten, etc., carbon film and transparent conductive films such as ITO (indium tin oxide), indium oxide, tin oxide, tin oxide-antimony, etc. These first and second electrode layers each have a thickness of generally 0.1 to 5 $\mu$m. If the electrode layers are too thin, defects are liable to be formed, and if they are too thick, the electrode layers are liable to be peeled off.

The first and the second electrode layers can be obtained by, for example, forming a metal film of chromium, aluminium, nickel, silver, gold, copper, etc. by such method such as sputtering, vapor deposition, electroless plating, etc. and forming the film into a pattern shape, and also can be formed by coating a paste having metal particles of silver, gold, etc. dispersed in a binder into a patterned shape by printing, etc., followed by baking. When the electrode layer is formed of a carbon film, it can be obtained by coating a paste having carbon particles in a binder into a patterned shape by printing, etc., followed by drying.

A transparent conductive film such as ITO, indium oxide, tin oxide, tin oxide-antimony, etc. can be obtained by forming a thin film according to such method as sputtering, vapor deposition, spraying, etc., and then forming the film into a patterned shape by etching, and it can be also formed by coating a paste having fine particles of ITO, tin oxide, tin oxide-antimony dispersed in a binder into a pattern shape by printing, etc., followed by baking.

In order to make the above diode elemental device have rectifying characteristics and function as the switching device, it is requited that either one of the above first and second electrode layers should form a Schottky junction with the above semiconductor layer 12, and the other electrode layer an ohmic junction with above semiconductor layer.

It has been known that the interface formed between the first or the second electrode layer and the above semiconductor layer 12 forms a Schottky junction or an ohmic junction depending on the materials employed for the electrode layer and the semiconductor layer. Therefore, the materials should be chosen depending on the purpose. For example, when cuprous oxide is employed as the material for the semiconductor layer, a Schottky junction is formed with the semiconductor layer if the electrode layer is copper, while an ohmic junction is formed with the semiconductor layer if the electrode layer is nickel, silver or gold. When zinc oxide is used as the material for the semiconductor layer, a Schottky junction is formed with the semiconductor layer if the electrode layer is formed of nickel, copper, gold, platinum, palladium, carbon or tungsten, while an ohmic junction is formed with the semiconductor layer if the electrode layer is formed of silver or ITO. When a metal chalcogenide semiconductor such as CdS, CdSe, CdTe, etc. is employed, when it is n-type semiconductor, if the electrode layer is Au, Ag, Pt, Pd, Ti, Cu, Ni or stainless steel, a Schottky junction is formed with the semiconductor layer, while an ohmic junction is formed with the semiconductor layer if the electrode layer is formed of In, Sn, Zn, Ta or ITO.

## Preparation of diode elemental device

For preparation of the diode elemental device de scribed above, for example, after formation of the first electrode layer on the electrically insulating substrate according to the methods mentioned above, a metal oxide semiconductor layer or a metal chalcogenide semiconductor layer may be formed on said firsts electrode layer according to the methods as exemplified below, and then the second electrode layer may be formed on said semiconductor layer according to the method as described above. The first electrode layer can be also formed into a patterned shape after formation of the semiconductor layer.

As the method for forming a metal oxide semiconductor layer or a metal chalcogenide semiconductor layer, preferred are, for example, the electrolytic precipitation method, the spraying method, the printing method, etc. inasmuch as a semiconductor layer of a large area can be formed easily. In the following, these methods are to be described successively.

### I. Electrolytic precipitation method

As the metal oxide semiconductor which can be formed by this method, for example, cuprous oxide may be included, and as the chalcogenide type semiconductor, for example, CdTe, CdS and CdSe may be included.

In this method, by dipping the substrate having been formed the first electrode layer thereon in a metal compound solution which is the electrolyte, locating an appropriate anode in said solution and applying a voltage on said substrate with the first electrode layer as the cathode, a semiconductor substance is formed on the first electrode layer to form a semiconductor layer. Here, as the anode, for example, an electrode comprising platinum, carbon, stainless steel, copper, etc. may be employed.

The solution to be used as the electrolyte in this method may be obtained by dissolving a suitable metal compound or ionizing a metal under appropriate conditions according to the kind of the desired semiconductor.

Next, the case of forming a semiconductor layer comprising cuprous oxide according to this method is described as an example.

As the electrolyte in this case, for example, a metal complex solution containing (1) 0.1 to 1 mol/liter of cupric sulfate anhydride or cupric sulfate pentahydrate, (2) 0.1 to 10 mol/liter of a basic compound such as calcium hydroxide, sodium hydroxide, ammonia, triethylamine, etc., and (3) 0.1 to 5 mol/liter of a coordination compound capable of forming a complex with copper under a basic solution dissolved therein may be employed.

As the coordination compound to be used in the electrolyte, there may be employed, for example, aspartic acid, lactic acid, ethylenediaminediacetic acid, ethylenediaminetetraacetic acid, propylenediaminetetraacetic acid, iminodiacetic acid, malonic acid, nitrilotriacetic acid, or sodium salts of these coordination compounds, and the coordination compound is not particularly limited, provided that a copper complex soluble in a basic aqueous solution can be formed.

The voltage to be applied between the cathode and the anode may be generally 0.01 to 10 V (DC), preferably 0.05 to 1 V (DC), and the current density of the current which flows through the electrode layer for precipitating cuprous oxide may be generally 0.01 to 50 mA/cm$^2$, preferably 0.1 to 20 mA/cm$^2$.

The temperature of the electrolyte may be any temperature within the range where no freezing or boiling of the electrolyte occurs, but preferably within the range from 20°C to 80°C.

According to the electrolytic precipitation method under the conditions as described above, a semiconductor layer comprising cuprous oxide having a specific resistivity of 10$^3$ to 10$^6$ Ω•cm is formed.

Next, examples of the cases when forming semiconductors comprising CdTe and CdS according to the electrolytic precipitation method are described.

As the electrolyte when forming a semiconductor layer comprising CdTe, for example, an aqueous solution containing (1) 0.01 to 0.5 mole/liter of cadmium chloride, cadmium acetate, cadmium sulfate or cadmium nitrate, (2) 0.05 to 5 mole/liter of an acidic compound such as sulfuric acid, hydrochloric acid, nitric acid, acetic acid, etc., and (3) 0.01 to 0.5 mole/liter of tellurium dioxide dissolved in water may be employed.

The voltage to be applied between the cathode and the anode may be generally 0.1 to 5 V (DC), preferably 0.5 to 2 V (DC), and the current density of the current which flows through the electrode layer for precipitating CdTe may be generally 0.01 to 50 mA/cm$^2$, preferably 0.1 tO 20 mA/cm$^2$.

The temperature of the electrolyte may be any temperature within the range where no freezing or boiling of the electrolyte occurs, but preferably within the range from 20°C to 85°C.

According to the electrolytic precipitation method under the conditions as described above, a semiconductor layer comprising CdTe having a specific resistivity of 10$^3$ to 10$^6$ Ω•cm is formed.

As the electrolyte when forming a semiconductor layer comprising CdS, for example, an electrolyte containing (1) 0.01 to 0.5 mole/liter of cadmium chloride, cadmium acetate, cadmium sulfate or cadmium nitrate, (2) 0,01 to 0.2 mole/liter of sulfur and (3) 0.01 to 1 mole/liter of potassium chloride or sodium chloride dissolved in a solvent such as dimethyl sulfoxide, dimethylformamide, propylene carbonate, etc. may be employed.

The voltage to be applied between the cathode and the anode may be generally 0.1 to 5 V (DC), preferably 0.5 to 2 V (DC), and the current density of the current which flows through the electrode layer for precipitating CdS may be generally 0.01 to 50 mA/cm$^2$, preferably 0.1 to 20 mA/cm$^2$.

The temperature of the electrolyte may be any temperature within the range where no freezing or boiling of the electrolyte occurs, but preferably within the range from 50°C to 150°C.

According to the electrolytic precipitation method under the conditions as described above, a semiconductor layer comprising CdS having a specific resistivity of 10$^3$ to 10$^6$ Ω•cm is formed.


II. Spraying method and printing method


As the metal oxide semiconductor which can be formed according to this methods, zinc oxide may be included, and as the chalcogenide semiconductor, CdSe and CdS may be included.

For formation of a semiconductor layer according to this methods, a desired metal compound solution may be sprayed or printed on a substrate having the first electrode layer formed thereon, and said metal compound pyrolyzed on said substrate, followed by a heat treatment.

When a semiconductor layer is formed by spraying, the semiconductor layer has to be patterned into a desired shape by a method such as etching, etc.

Next, the case of forming a semiconductor layer comprising zinc oxide according to this method is described as an example.

As the metal compound solution in this case, there can be included:

(1) a solution of an inorganic salt of zinc, for example 1) about 0.01 to 10 mole/liter of an aqueous zinc chloride solution, 2) the solution of 1) to which some hydrogen peroxide is added, 3) the solution of 2) to which some hydrochloric acid is added, etc.

(2) an aqueous solution of an organic salt of zinc, for example, an aqueous one containing about 0.01 to 1 mole/liter of zinc acetate,

(3) an organic solution in which zinc acetate, zinc stearate, zinc 2-ethylhexanoate or the like is dis solved in a solvent, e.g., an alcohol such as methanol, ethanol, etc., a polyhydric alcohol such as hexylene glycol, etc., a hydrocarbon such as benzene, toluene, hexane, etc. or an ester such as butyl acetate, butyl propionate, etc., so as to give a concentration of about 0.01 to 1 mole/liter,

(4) the aqueous solutions of the above (1) to (3) in which fine particles of zinc oxide are added, etc.

During spraying or after coating with above-mentioned zinc solutions, the substrate is to be heated at 100 to 700°C, preferably at 300 to 700°C to form precursor film containing a zinc compound.

In this step, the compound employed is fixed on the substrate, and a part or all thereof is pyrolyzed to be converted into the oxide. The heat treatment applied thereafter may be conducted at a temperature of 100 to 800°C for about 15 minutes to 8 hours, preferably at 400 to 800°C for 2 to 8 hours. By this treatment, a crystallized semiconductor layer comprising zinc oxide is obtained.

When forming a semiconductor layer comprising CdS according to the spraying method and the printing method, as the metal compound solution to be employed, for example, (1) an aqueous solution containing 0.001 to 0.5 mole/liter of cadmium chloride, cadmium sulfate, cadmium acetate, cadmium nitrate, etc. and 0.001 to 0.5 mole/liter of N,N-dimethylthiourea, allylthiourea, thiolic acid, ammonium thiocyanate, etc. dissolved in water, (2) the aqueous solution of (1) to which fine particles of CdS are added, etc. can be included.

For pyrolysis of these compounds on the substrate, for example, the temperature of the substrate may be heated at 100 to 500°C, preferably 300 to 500°C.

In this step, the compound employed is fixed on the substrate, and a part or all thereof is pyrolyzed to be converted into CdS. The heat treatment applied there after may be conducted at a temperature of 100 to 400°C for about 15 minutes to 4 hours, preferably at 200 to 400°C for 1 to 4 hours. By this treatment, a crystallized semiconductor comprising CdS is obtained.

When a semiconductor layer comprising CdSe is to be formed, according to the spraying method and the printing method, as the metal compound solution to be employed, for example, (1) an aqueous solution containing 0.001 to 0.5 mole/liter of cadmium chloride, cadmium sulfate, cadmium acetate, cadmium nitrate, etc. and 0.001 to 0.5 mole/liter of seleniumurea, N,N-dimethylselenourea etc. dissolved in water, (2) the aqueous solution of (1) to which fine particles of CdSe are added, etc. can be included.

During spraying or after coating of above-mentioned solutions, the substrate is to be heated at 100 to 500°C, preferably at 300 to 500°C to form precursor film containing a Cd and Se compound.

In this step, the compound employed is fixed on the substrate, and a part or all thereof is pyrolyzed to be converted into CdSe. The heat treatment applied thereafter may be conducted at a temperature of 100 to 400°C for about 15 minutes to 4 hours, preferably at 200 to 400°C for 1 to 4 hours. By this treatment, a crystallized semiconductor comprising CdSe is obtained.

## Liquid crystal display device

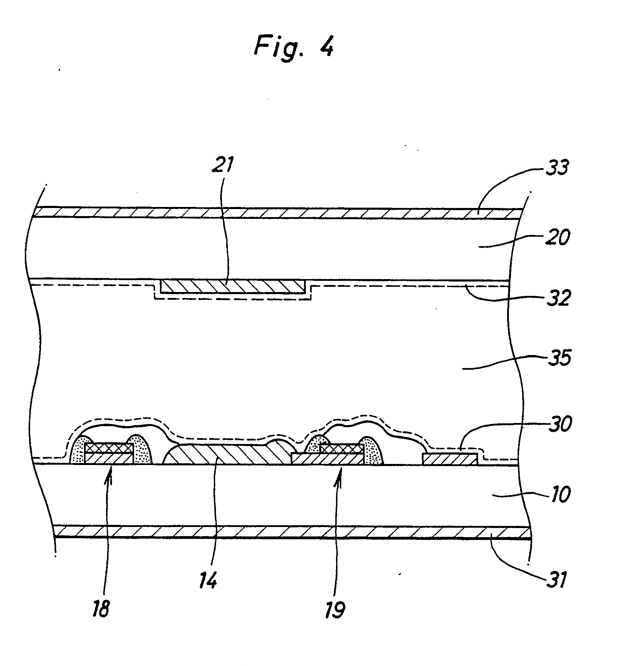

A liquid crystal display device is produced, for example, by laminating the active matrix substrate of the present invention and an electrically insulating substrate equipped with transparent electrodes (signal electrodes 21 shown in Fig. 4), one over the other, with a liquid crystal interposed therebetween. An example of the liquid crystal display device is shown in Fig. 4.

In the liquid crystal display device, the electrically insulating substrate 20 provided as opposed to the active matrix substrate of the present invention is pro vided with the transparent electrodes 21 which become the signal electrodes. The transparent electrodes 21, although Fig. 4 shows only one electrode, are practically provided in a plural number in a matrix, whereby rows mutually in parallel relationship to each other are formed. In each row of such transparent electrodes 21, each transparent electrode 21 is connected electrically in series with, for example, ITO stripe or metal line, etc., and the row of the transparent electrodes 21 are arranged so as to have right angles or angles approximate to right angle relative to the row of the transparent electrodes 14.

At least either one of the electrically insulating substrates 10 and 20 is transparent.

On the inner surface of the active matrix substrate is provided an alignment layer 30, and a polarizer film 31 on the outer surface. The polarizing axis of the polarizer film 31 is in the same direction as the orientation direction of the alignment layer 30.

Similarly, on the inner surface of the opposite insulating substrate 20 is provided the alignment layer 32, and on its outer surface the polarizer film 33. The polarizing axis of the polarizer film 33 is in the same direction as the orientation direction of the alignment layer 32, and is in relationship to be crossed at right angle with the polarizing axis direction of the polarizer film 31. Thus, between the substrates having such alignment layer and polarizer film formed thereon, the liquid crystal 35 is injected to constitute a liquid crystal display device.

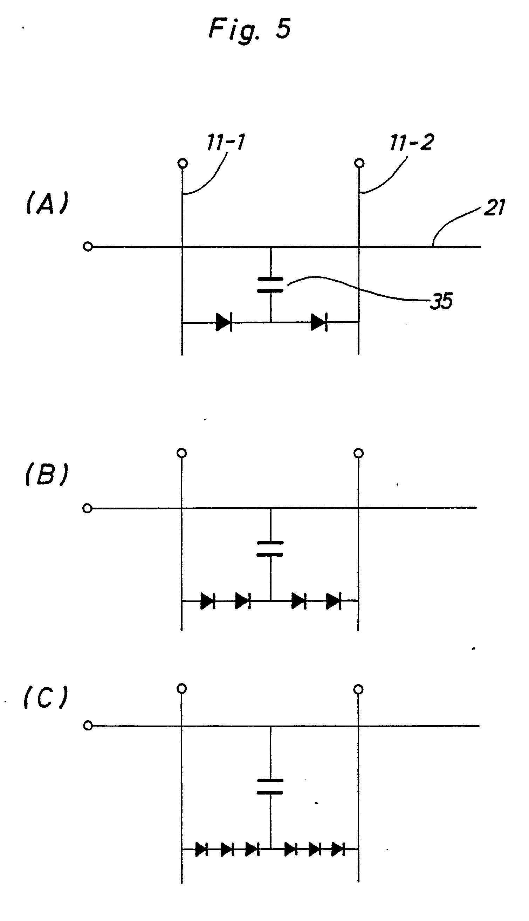

The equivalent circuit of the liquid crystal display device is shown in Fig. 5 (A). The above equivalent circuit is an example when two diode elemental devices are provided per one picture element, and the equivalent circuits when 4 and 6 diode elemental devices are provided per one picture element are shown in Fig. 5 (B) and Fig. 5 (C), respectively.

In the above liquid crystal display device, deviation in switch characteristics is small, and the picture elements can be driven at a low voltage and at a high precision.

EXAMPLES

Example 1 - Formation of semiconductor layer according to the electrolytic precipitation method -

An active matrix substrate shown in Fig. 2 was prepared as described below.

(1) After formation of a nickel layer on the silicon oxide coated glass substrate 10 having dimensions of 1 mm x 50 mm x 60 mm according to the nickel electroless plating method, a copper layer was further formed on said nickel layer according to the electroless plating method.

(2) In a glass vessel, 99.8 g of cupric sulfate pentahydrate, 158.2 g of sodium hydroxide, 270.2 g of lactic acid were dissolved in pure water to prepare 1,000 ml of an electrolyte containing a copper complex.

(3) In the electrolyte of (2) was dipped the substrate having electroless plating layers formed thereon in (1), with said electroless plating layers being as the cathode, while a copper electrode being separately dipped into the electrolyte as the anode. Direct current was passed under the conditions of a temperature of the electrolyte of 65° C and a current density on the cathode side of 2 mA/cm² for 10 minutes, whereby cuprous oxide with a film thickness of about 2 μm was formed on the copper layer.

(4) The cuprous oxide layer formed in the above (3) was subjected to lithography and etching to form a pattern of the cuprous oxide layer 12.

(5) Further, the above electroless plating layers were subjected to lithography and etching to form patterns of the scanning electrodes 11-1 and 11-2 and the electrode 11-3.

(6) As the insulating layer 13, a pattern of cyclized polyisoprene (trade name: CIR 702, manufactured by Japan Synthetic Rubber Co. Ltd.) was formed by photolithography.

(7) By screen printing of an ITO coating solution, a pattern of the transparent electrode 14 was formed.

(8) By screen printing of a silver paste to form the electrode 15, an active matrix substrate having the diode elemental devices shown in Fig. 2 was obtained.

When the I-V characteristics of the diode elemental devices of the matrix substrate were measured, the rectifying characteristics as schematically shown in Fig. 3 were confirmed.

Example 2 - Formation of semiconductor layer according to the spraying method -

(1) A nickel layer was formed on a silicon oxide coated glass substrate 10 having dimensions of 1 mm x 50 mm x 60 mm according to the electroless plating method.

(2) In a glass vessel, 2 g of zinc chloride was placed and dissolved in 150 ml of pure water to prepare a solution for spraying.

(3) The glass substrate having the nickel layer formed in the above (1) was arranged on a hot plate controlled to a temperature of 100° C, and the zinc chloride solution prepared in (2) was sprayed from a distance of about 20 cm.

(4) The glass substrate obtained in (3) was subjected to heat treatment at 400° C for 2 hours to form a zinc oxide layer.

(5) The zinc oxide layer obtained in (4) was subjected to lithography and etching to form a pattern of the zinc oxide layer 12.

(6) Further, lithography and etching were applied to the electroless plating layer to form patterns of the scanning electrodes 11-1 and 11-2 and the electrode 11-3.

(7) As the insulating layer 13, a pattern of a cyclized polyisoprene (CIR 702) was formed by photolithography.

(8) By screen printing of an ITO coating solution, a pattern of the transparent electrode 14 was formed.

(9) By screen printing of a gold paste, the electrode 15 was formed to give an active matrix substrate having the diode elemental devices shown in Fig. 2.

The I-V characteristics of the diode elemental devices of the active matrix substrate obtained were measured, and the rectifying characteristics as schematically shown in Fig. 3 were whereby confirmed.

Example 3 - Formation of semiconductor layer according to the printing method -

(1) A nickel layer was formed on the silicon oxide coated glass substrate 10 having dimensions of 1 mm x 50 mm x 60 mm according to the electroless plating method.

(2) A printing solution was prepared by dissolving 20 g of zinc acetate and 20 g of nitrocellulose in 160 g of methanol.

(3) On the nickel layer on the glass substrate obtained in (1), the printing solution prepared in (2) was screen printed.

(4) The glass substrate obtained in (3) was sintered in air at 500° C for 2 hours to form a zinc oxide layer on the nickel layer.

(5) Subsequently, according to the same operations as in the steps (5) to (9) in Example 2, formation of a pattern of the zinc oxide layer 12, formation of patterns of the scanning electrodes 11-1 and 11-2 and the electrode 11-3, formation of the insulating layer 13, formation of a pattern of the transparent electrode 14, and formation of the electrode 15 were performed to give an active matrix substrate having the diode elemental devices shown in Fig. 2.

The I-V characteristics of the diode elemental devices on the active matrix substrate obtained were measured, and the rectifying characteristics as schematically shown in Fig. 3 were obtained.

Example 4

Each of active matrix substrate formed in Examples 1 to 3, and a glass substrate having transparent electrode corresponding to the size of the transparent electrode 14 was spin-coated with a polyimide solution (manufactured by Japan Synthetic Rubber Co., Ltd., trade name: Optomer AL), dried at room temperature and then subjected to a heat treatment at 200° C, followed by rubbing to form an alignment layer.

The above-described active matrix substrate and glass substrate were laminated one over the other so that the respective rubbing directions might become perpendicular to each other to form a cell. Polarizer films were then laminated on the outer faces of the glass substrates positioned on both sides of said cell so that the polarizing axes might become in the same directions as the respective rubbing directions (i.e., crossed Nicol state).

Subsequently, under the crossed Nicol state, a nematic liquid crystal mixture was injected into between the two substrates so that the light transmittance became 10% at an applied voltage of 2.5 V to complete preparation of the cell.

The above cell having the liquid crystal injected therein was found to be under light state when no voltage was applied.

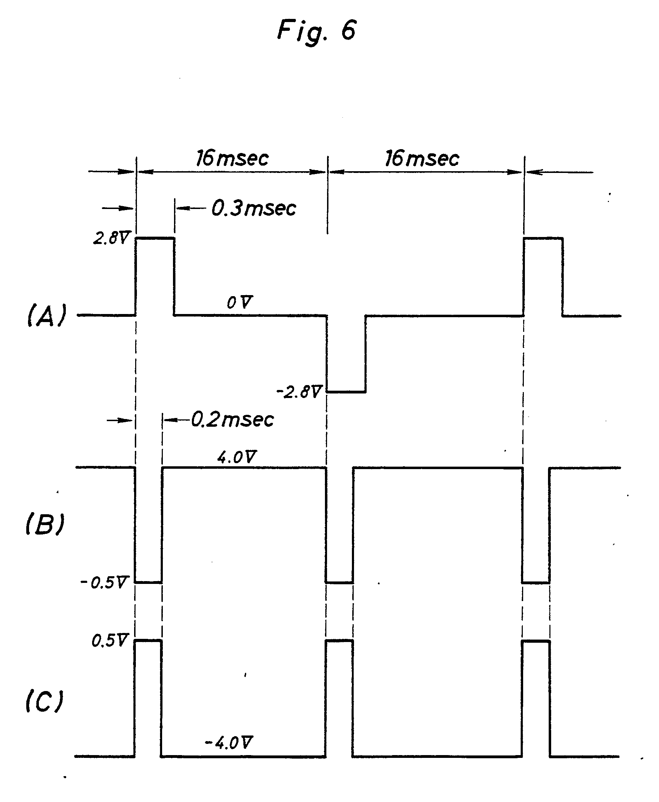

Next, in the above cell, the voltage shown in Fig. 6 (B) was applied on the scanning electrode 11-1, and the voltage shown in Fig. 6 (C) on the scanning electrode 11-2, respectively. Further, on the transparent electrodes of the opposite glass substrates, the voltage shown in Fig. 6 (A) was applied. Under this state, the above cell showed dark state.

The contrast ratio of lightness to darkness was found to be 30 in the case of using the active matrix substrate of Example 1, 25 in the case of Example 2 and 35 in the case of Example 3.

A signal having a positive pulse and a negative pulse as shown in Fig. 6 (A) was applied to the transparent electrode on the opposite substrate. The peak voltage of the positive pulse and that of the negative pulse were symmetrically varied from 1.8 to 2.8 V and from -1.8 to -2.8 V, respectively. As the result, 4 or more stages of brightness were recognized.

When a direct current of 4 V was applied on the scanning electrode 11-1, and a direct current of - 4 V on the scanning electrode 11-2, respectively, and any voltage within the range from - 3.5 to 3.5 V was applied on the transparent electrodes of the opposite glass substrates, said cell exhibited light state.

From the Examples as described above, it can be understood that by use of the active matrix substrate of the present invention, without use of a special device such as vacuum film forming equipment, etc., it has become possible to prepare an active matrix system dot matrix liquid crystal display device of high performance.

**Claims**

1. An active matrix substrate for liquid crystal display device comprising a plurality of scanning electrodes arranged in substantially parallel to each other and a plurality of transparent electrodes for forming picture elements provided on an electrically insulating substrate, said plurality of transparent electrodes being arranged in a matrix to form rows parallel to each other, each row of said transparent electrodes being positioned respectively between the two scanning electrodes (the first and the second scanning electrodes) or adjacent to the scanning electrode pair, wherein an even number of diode elemental devices are formed per said picture element, which even number of diode elemental devices constitute a diode row connected electrically in series and in the same direction, and yet said transparent electrodes for forming picture elements are electrically connected at the intermediate point where the even number of diode elemental devices of the diode row are divided into the same numbers,

one side end of said diode row is electrically connected to the first scanning electrode, and the other side end to the second scanning electrode, and

said diode elemental device comprises a first electrode layer formed on an electrically insulating substrate, a metal oxide semiconductor or a metal chalcogenide semiconductor layer formed on said first electrode layer and a second electrode layer formed on said semiconductor layer, one of said first electrode and said second electrode layer together with said semiconductor layer forming a Schottky junction and the other of said first electrode layer and said second electrode layer forming an ohmic junction.

2. An active matrix substrate according to claim 1, wherein 2, 4 or 6 diode elemental devices are formed per one picture element.

3. An active matrix substrate according to claim 1, wherein said metal oxide semiconductor layer formed on said first electrode is composed of zinc oxide or cuprous oxide.

4. An active matrix substrate according to claim 1, wherein the metal chalcogenide semiconductor layer formed on said first electrode layer is composed of either one of cadmium sulfide, cadmium selenide or cadmium telluride.

5. An active matrix substrate according to claim 3, wherein said semiconductor layer is formed of cuprous oxide, one of the first and the second electrode layers is formed of copper, and the other of the first and the second electrode layers is formed of nickel, silver or gold.

6. An active matrix substrate according to claim 3, wherein said semiconductor layer is formed of zinc oxide, one of the first and the second electrode layers is formed of nickel, copper, gold, platinum, palladium, carbon or tungsten, and the other of the first and the second electrode layers is formed of silver or indium tin oxide.

7. An active matrix substrate according to claim 1, wherein the semiconductor layer of said diode elemental device is prepared by an electrolytic precipitation method, a spraying method, or a printing method.

## Fig. 1

(A)

50

52

53

51

(B)

50

51

53

52

# Fig. 2

# Fig. 3

## Fig. 4

## Fig. 5

(A)

11-1

11-2

21

35

(B)

(C)

## Fig. 6